# EUROPEAN PATENT SPECIFICATION

(11) **EP 2 192 028 B1**
(45) Date of publication and mention of the grant of the patent: **03.08.2011**
(21) Application number: 10157776.5
(22) Date of filing: 25.11.2008
(51) Int. Cl.: B62D 25/08, B62D 27/02

(54) **Joint structure of vehicular frames**
Verbindungsstruktur für Fahrzeugrahmen
Structure de joint de chassis de véhicule

(30) Priority: 25.12.2007 JP 2007331610
(43) Date of publication of application: 02.06.2010
(62) Divisional of application: 08020459.7
(73) Proprietor: Honda Motor Co., Ltd., Tokyo 107-8556 (JP)
(72) Inventor: Kanaguchi, Yutaka, Saitama 351-0193 (JP)
(74) Representative: Herzog, Markus

(56) References cited:
- EP-A- 0 568 251
- EP-A2- 1 840 007
- DE-A1- 19 653 509
- DE-B3-102004 011 252
- JP-A- 2004 009 067
- US-B1- 6 241 310

## Description

### Field of the Invention

The present invention relates to a joint structure of vehicular frames according to the preamble part of claim 1.

### Description of the Related Art

Vehicular frames which are formed by hydroforming are known. Hydroforming is a method for forming a tubular member. Specifically, the inside of the tubular material placed in a mold is filled with liquid and then the tubular material is pressed into the mold along the axial direction of the tubular material while the pressure of the liquid is kept rising until the tubular material matches the mold. According to the method, it is advantageous in that a frame having continuously changing cross-section is formed from a tubular member without decrease of radial thickness caused by forming. It is also advantageous in that various processes such as piercing can be performed at the same time as the forming.

From the above view point, closed section structural members manufactured by hydroforming are greatly anticipated to be used as vehicular frame members having a complex cross-sectional shape.

For example, closed section structural members manufactured by hydroforming are used for some of the frame members provided at the front of the body of a vehicle (see, for example, Japanese Patent Publication No. 3921409).

The closed section structural member manufactured by hydroforming does not have a flange portion because it is formed from a tubular material. As disclosed in the above patent document, if the closed section structural member is arranged so as to intersect with another closed section structural member to be joined, the two members can be joined to each other by spot welding where a spot welding gun is inserted into a space inside the structural member. However, if the two members are arranged in a straight line, there is a problem in that the welding operation cannot be performed because a space for inserting the spot welding gun cannot be ensured.

Therefore, solutions to the above-described manufacturing problem using closed section structural members formed by hydroforming in joint structure have been requested. EP-A-1 840 007 discloses a joint structure for vehicular frames according to the preamble part of claim 1.

In view of the above-mentioned problem, the present invention has an object to provide a joint structure of vehicular frames which enables a closed section structural member having no flange portion at the end to be reliably joined to another closed section structural member.

### SUMMARY OF TUBE INVENTION

In order to achieve the above-described object, the present invention employs a joint structure of vehicular frames as defined in claim 1

According to the above-described joint structure of vehicular frames, a member having no flange portion can be used as the first closed section portion, and the first closed section portion having no flange portion can be joined to the second closed section portion in a linear fashion by welding including spot welding.

That is, since the end portion of the first closed section portion is provided with an opening portion for spot welding the first closed section portion to one of the two members of the second closed section portion, accessibility for a welding machine is improved when jointing the first closed section portion to the second closed section portion in a linear fashion. As a result, the first closed section portion having no flange portion can be joined to the second closed section portion without reducing the efficiency of manufacturing, and the reliability of the joint can be enhanced.

It may be arranged such that the opening portion is formed by notching a part of the end portion of the first closed section portion.

In this case, the remaining wall face which is not cut out can be used as a spot welding face.

As a result, adequate joint strength in spot welding can be ensured.

It may be arranged such that the end portion of the first closed section portion is cut such that the cross angle of the cut surface with respect to a center line, which passes through the center of the vehicle in the width direction thereof and follows the longitudinal direction thereof, is smaller than that in a case where the end portion of the first closed section portion is cut perpendicular to the longitudinal direction thereof.

In this case, since the section area of the opening portion of the first closed section portion is larger than that in a case where the end portion is not obliquely cut out, the section area which receives a load transmitted from the front portion of the vehicle increases.

As a result, it is possible to reduce a load acting on each peripheral portion of the opening portion.

In addition, a joint structure of vehicular frames according to the present invention may be arranged such that a part of a periphery of the opening portion is provided with a protruding piece which protrudes in the longitudinal direction of the first closed section portion; and the protruding piece is spot welded to one of the two members of the second closed section portion.

According to the above-described joint structure of vehicular frames, the protruding piece can be spot welded.

That is, since the end portion of the first closed section portion is provided with the opening portion and a part of the periphery of the opening portion is provided with the protruding piece, accessibility of a welding machine is improved when joining the first closed section portion to the second closed section portion in a linear fashion. In other words, a member which is formed by hydroforming and has no flange portion on the end portion thereof can be used as the first closed section portion. As a result the first closed section portion having no flange portion can be joined to the second closed section portion in a linear fashion by spot welding without reducing the efficiency of manufacturing, and the reliability of the joint can be enhanced.

### BRIEF DESCRIPTION OF THE DRAWINGS

FIG 1 is a perspective view showing a front portion of the vehicle body according to an embodiment of the present invention.
FIG 2 is an enlarged view showing principal portions of FIG 1.
FIG 3 is an exploded perspective view showing principal portions according to an embodiment facilitating the understanding of the present invention.
FIG 4 is an exploded perspective view showing principal portions according to an embodiment of the present invention.

### DETAILED DESCRIPTION OF THE INVENTION

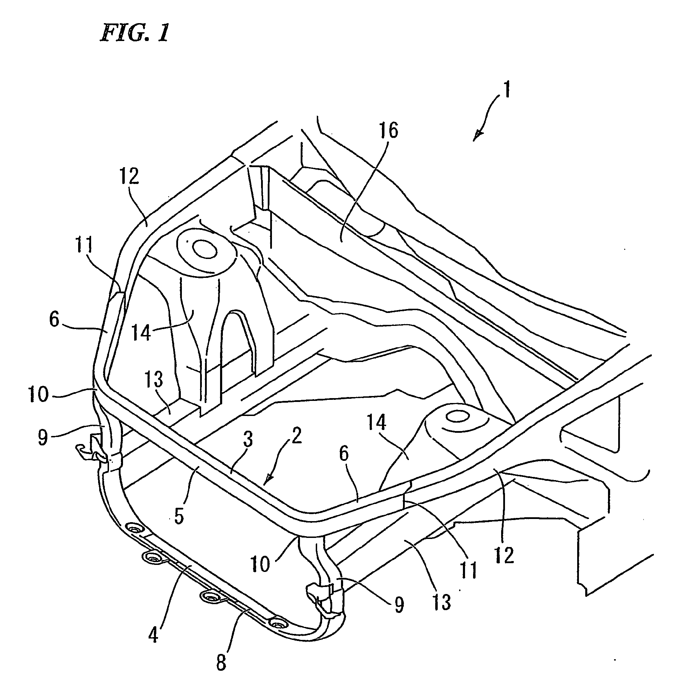

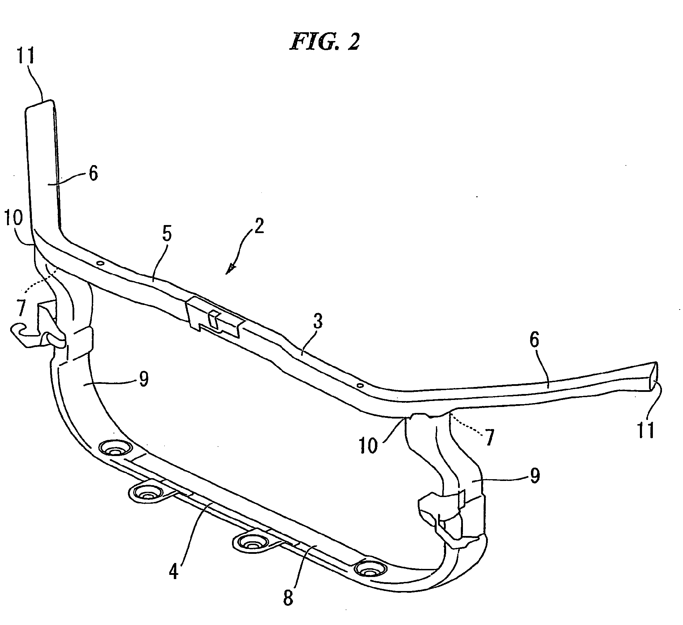

A first embodiment according to the present invention will be explained below with reference to the drawings. FIG 1 is a perspective view showing the front portion of a vehicle, and FIG 2 is an enlarged view showing principal portions of FIG 1. As shown in FIGS 1 and 2, the front portion of a vehicle body 1 is provided with a frame-shaped front bulk head 2 for supporting and protecting a radiator which is not shown in the figures. The front bulk head 2 consists of a bulk head upper frame 3 making up the upper portion and a bulk head lower frame 4 making up the lower portion, both ends of which rise upward. The bulk head upper frame 3 has an upper frame portion 5 extending along the vehicle width direction and slanted frame portions 6 extending rearwardly outward from both ends of the upper frame portion 5. The bulk head lower frame 4 has a flat portion 8 and lateral frame portions 9 which rise upward from both ends of the flat portion 8 while gently bending. Upper opening portions 10 of the lateral frame portions 9 of the bulk head lower frame 4 are joined to lower walls 7 between the upper frame portion 5 of the bulk head upper frame 3 and the slanted frame portions 6 by but-welding.

The bulk head upper frame 3 and the bulk head lower frame 4 are formed by hydroforming using tubular materials. The upper frame portion 5 of the bulk head upper frame 3 and the two slanted frame portions 6 are integrally formed. The flat portion 8 of the bulk head lower frame 4 and the two lateral frame portions 9 are also integrally formed. Namely, since the bulk head upper frame 3 and the bulk head lower frame 4 have openings at the ends and are not provided with flange portions, the bulk head upper frame 3 and the bulk head lower frame 4 can be lightweight because of they lack flange portions. It is noted that piercing process are applied to the bulk head upper frame 3 and the bulk head lower frame 4, if necessary.

Front end portions of wheel house upper members 12 are joined to opening portions 11 which open at both end of the bulk head upper frame 3

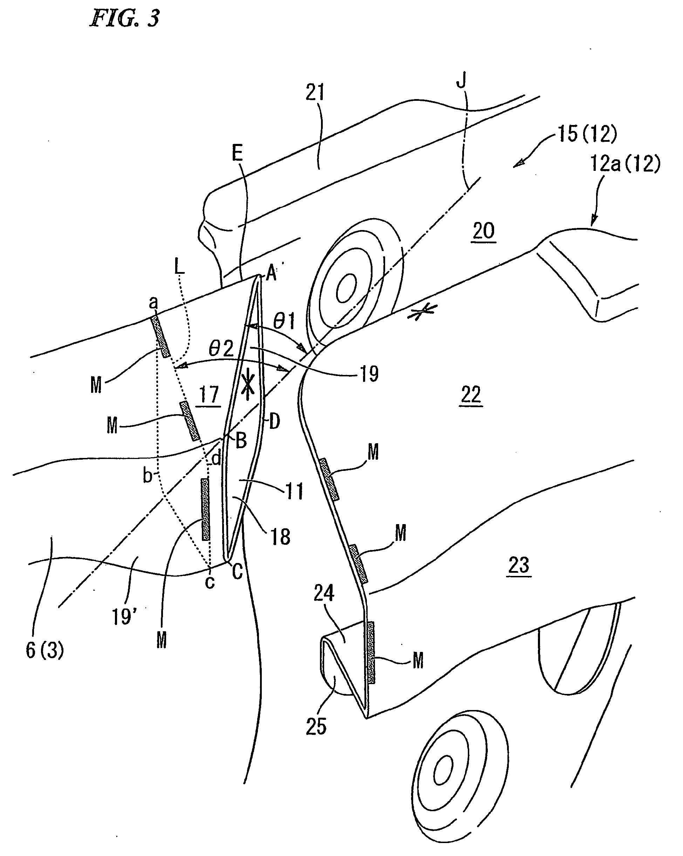

Front end portions of front side frames 13 which are vehicular frame member and have a closed section structure are joined to the bulk head lower frame 4. Lower portions of damper housings 14 are joined to the front side frames 13. Outer peripheries of the damper housings 14 are joined to front wheel houses 15 (which is shown only in FIG. 3). The wheel house upper members 12 having a closed section structure are formed by joining wheel house upper member pieces 12a to the upper portions of the front wheel houses 15. It is noted that the numeral 16 in FIG. 1 refers to a dash upper panel.

FIG. 3 shows a joint portion between the opening portion 11 at the left-hand end portion of the bulk head upper frame 3 and the wheel house upper member 12, namely, a joint portion between wheel house upper member piece 12a and the front wheel houses 15. Hereinafter, a description on the opening portion 11 at the right-hand end portion of the bulk head upper frame 3 is omitted since the opening portion 11 is similar to that of the left-hand end portion of the bulk head upper frame 3

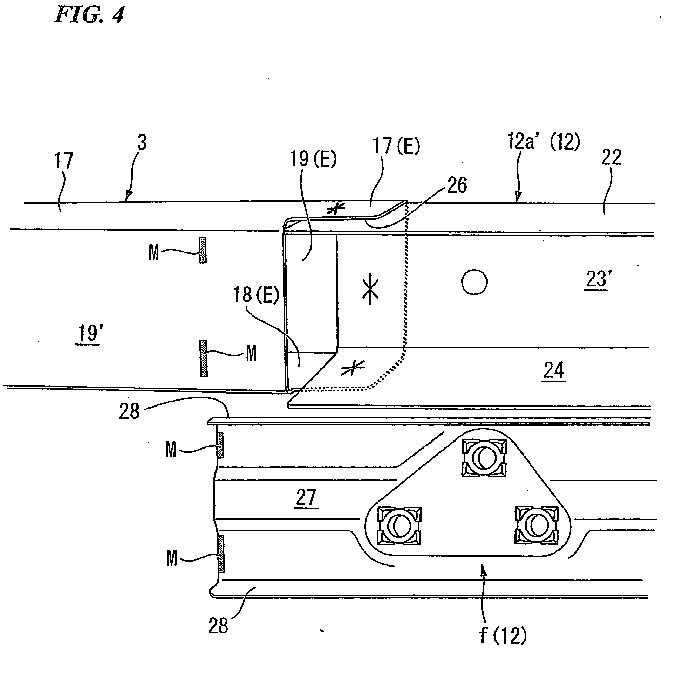

As shown in FIG 3, showing an embodiment which does not fall within the scope of protection conferred by the claims, the opening portion at the end portion of the bulk head upper frame 3 is formed by cutting the end portion at an angle toward the longitudinal direction of the slanted frame portion 6 (the bulk head upper frame 3) as shown in FIG 4, showing an embodiment according to the invention. Specifically, in a case where the end portion is cut perpendicular to the longitudinal direction of the bulk head upper frame 3, the cut surface of the end portion has a cross angle of θ2 with respect to a center line J which passes through the center of the vehicle body in the width direction and follows the vehicular longitudinal direction. In the present embodiment, the end portion is cut such that the cut surface of the end portion has a cross angle of θ1, which is smaller than θ2, with respect to the center line J and the opening portion 11 faces outward in the vehicular width direction (θ1 <θ2).

If it is assumed that a virtual cut line L which follows a cross section of the end portion in the case where the end portion is cut perpendicular to the longitudinal direction at slightly forward of the opening portion 11, it can be viewed that a protruding piece E is formed so as to protrude rearward from the virtual cut line L. The protruding piece E consists of trapezoidal portions of the upper wall 17 and the lower wall 18, and a square portion of the interior lateral wall 19; among an upper wall 17, a lower wall 18, an interior lateral wall 19 facing the interior of the vehicle, and an exterior wall 19' facing the exterior of the vehicle of the bulk head upper frame 3.

A flange portion 21 is formed on a front end of an upper edge of a vertical wall 20 of the front wheel houses 15 while protruding toward the interior of the vehicle. On the other hand, the wheel house upper member piece 12a has a U shape cross section of which the opening faces the interior of the vehicle, and includes an upper wall 22, a lateral wall 23, and a lower wall 24. The lower wall is provided with a vertical flange portion 25 which protrudes downward. The upper wall 22 of the wheel house upper member piece 12a is spot welded to the flange portion 21 of the front wheel houses 15 (the welded spots are illustrated by * (asterisk) in the figures). The vertical flange portion 25 of the wheel house upper member piece 12a is joined to the vertical wall 20 of the front wheel houses 15 by spot welding. As a result, the wheel house upper member 12 having a closed section structure is formed.

Meanwhile, the lateral wall 19 of the bulk head upper frame 3 is joined to the vertical wall 20 of the front wheel houses 15 by spot welding (not shown in the figures). In addition, along the virtual cut line L, edges of the upper wall 22, the lateral wall 23, and the lower wall 24 of the wheel house upper member piece 12a are joined to the upper wall 17, the lower wall 18, and the lateral wall 19' of the bulk head upper frame 3 by mig welding at mig welding positions M (illustrated by hatching in the figures)

According to the above-described embodiment, the bulk head upper frame 3 which is a vehicle front frame and has closed section structure can be linearly joined to the wheel house upper member 12 without providing flange portions to the bulk head upper frame 3, in which the wheel house upper member 12 consists of the front wheel house 15 and the wheel house upper member piece 12a so as to have a closed section structure, and is a vehicular frame member. Specifically, since the end portion of the bulk head upper frame 3 is provided with the opening portion 11, accessibility of a welding machine is improved when joining the bulk head upper frame 3 and the wheel house upper member 12 in a linear fashion. In other words, a member which is formed by hydroforming and has no flange portion on the end portion thereof can be used as the bulk head upper frame 3. In addition, since the accessibility of the welding machine is improved, the reliability of the joint can be enhanced without reducing the efficiency of manufacturing.

In addition, the opening portion 11 at the end portion of the bulk head upper frame 3 can be obtained by a simple process of oblique cutting, in which the opening portion 11 can be larger than that obtained by vertical cutting. Thereby, a space for spot welding, namely the protruding piece E is ensured. Specifically, because of the enlarged opening portion 11, a larger insertion space for a spot welding gun is ensured, and thereby the operation of spot welding can be facilitated.

Further, the bulk head upper frame 3 is cut such that the cut surface, with respect to the center line J, has the cross angle of θ1 being smaller than 92 which is the cross angle in the case where the bulk head upper frame 3 is cut perpendicular to the longitudinal direction thereof (θ1 <θ2), and the opening portion 11 faces outward in the vehicular width direction. For this reason, a square formed at the end of the opening portion 11 (square A B C D in FIG 3) is larger than a square formed by the virtual cut line L (square a b c d) where the cross angle is θ2. That is, the opening area of the bulk head upper frame 3 according to the present embodiment becomes larger than that in the case where the bulk head upper frame 3 is cut perpendicular to the longitudinal direction thereof.

Because of the increase of the opening area, an area receiving an impact load applied from the front side of the vehicle body 1 increases. Thus, it is advantageous in that a load acting on each peripheral portion of the opening portion 11 is reduced. Specifically, when a load from the front side of the vehicle acts on the wheel house upper members 12 through the bulk head upper frame 3 at the time of a frontal vehicular collision, the dispersed load applied to each peripheral portion of the opening portion 11 is reduced. As a result, local concentration of stress can be avoided.

An embodiment of the present invention will be explained below with reference to FIG 4. It is noted, in the present embodiment, that parts the same as those of the above-explained non-inventive embodiment have the same symbols.

In the present embodiment, a part of the opening portion 11, more specifically the lateral wall 19' facing the exterior of the vehicle, is provided with a notch portion 26, although the opening portion 11 of the end portion of the bulk head upper frame 3 is obliquely cut in the above-described first embodiment In addition, a lid member f is joined to the wheel house upper member piece 12a' having a U shape cross section which opens toward the exterior of the vehicle in the present embodiment The lid member f has flanges 28, 28 at the upper and lower edges.

Therefore, a whole portion of the opening portion 11 of the bulk head upper frame 3 except the notch portion 26, specifically the protruding portions of the upper wall 17, the lower wall 18, and the lateral wall 19 facing the interior of the vehicle are making up the protruding piece E. The protruding piece E is spot welded to the upper wall 22, the lower wall 24, and the lateral wall 23' facing the interior of the vehicle, of the wheel house upper member piece 12a' at three spots.

After that, the lid member f is disposed on the lateral wall 23' of the wheel house upper member piece 12a' so as to close the notch portion 26, and then a front edge of a vertical wall 27 of the lid member f and the lateral wall 19' of the bulk head upper frame 3 are joined by mig welding at mig welding positions M. It is noted that the flanges 28, 28 of the lid member f are fitted into a lateral edge of the upper wall 22 from the inside, and then those are mutually spot welded.

As a result, the bulk head upper frame 3 having a closed cross section structure and the wheel house upper members 12 which consists of the wheel house upper member piece 12a' and the lid member f are joined to each other in a linear fashion.

According to the.present embodiment, the bulk head upper frame 3 having closed cross section structure and no flange portion can be linearly joined to the wheel house upper members 12 which has a closed cross section structure and is formed with the wheel house upper member piece 12a' and the lid member f. In other words, a member which is formed by hydroforming can be used as the bulk head upper frame 3. In addition, since the accessibility of the welding machine, especially used for spot welding the three spots is improved, the reliability of the joint can be enhanced without reducing the efficiency of manufacturing.

Moreover, in the bulk head upper frame 3, the protruding portions of the upper wall 17, the lower wall 18, and the lateral wall 19 facing the interior of the vehicle are making up the protruding piece E. The protruding piece E is reliably spot welded to three spots of the upper wall 22, the lower wall 24, and the lateral wall 23' facing the interior of the vehicle, of the wheel house upper member piece 12a'. As a result, adequate joint strength in spot welding can be ensured.

It is noted that the present invention is not limited to the above-described embodiment but is applicable to any cases where the closed sectional members are joined in a linear fashion. For example, the present invention can be applied to portions other than the joint portion between the bulk head upper frame 3 and the wheel house upper members 12.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A joint structure of vehicular frames comprising:
a first closed section portion which consists of one member (3); and
a second closed section portion which consists of two members (12a', f), to which an end portion of the first closed section portion is linearly joined so that the first closed section portion and the second closed section portion are arranged in a straight line,
wherein the end portion of the first closed section portion is provided with an opening portion (11) for spot welding the first closed section portion to one (12a') of said two members (12a', f) of the second closed section portion,
**characterized in that** the respective other one (f) of said two members (12a', f) of the second closed section portion is joined to the end portion of the first closed section by mig welding (M) and **in that** the opening portion is formed by notching a part of the end portion of the first closed section portion.

2. The joint structure of vehicular frames according to claim 1, wherein the end portion of the first closed section portion is cut such that the cross angle of the cut surface with respect to a center line (J), which passes through the center of the vehicle in the width direction thereof and follows the longitudinal direction thereof, is smaller than that in a case where the end portion of the first closed section portion is cut perpendicular to the longitudinal direction thereof.

3. The joint structure of vehicular frames according to one of the preceding claims, wherein a part of a periphery of the opening portion (11) is provided with a protruding piece (E) which protrudes in the longitudinal direction of the first closed section portion; and
the protruding piece (E) is spot welded to one (12a') of said two members (12a', f) of the second closed section portion.

## Patentansprüche

1. Fahrzeugrahmen-Verbindungsstruktur, umfassend:
- einen aus einem Element (3) bestehenden ersten Abschnitt mit geschlossenem Querschnitt und
- einen aus zwei Elementen (12a', f) bestehenden zweiten Abschnitt mit geschlossenem Querschnitt, mit welchem ein Endabschnitt des ersten Abschnitts mit geschlossenem Querschnitt linear verbunden ist, so dass der erste Abschnitt mit geschlossenem Querschnitt und der zweite Abschnitt mit geschlossenem Querschnitt in einer geraden Linie angeordnet sind,
wobei der Endabschnitt des ersten Abschnitts mit geschlossenem Querschnitt mit einem Öffnungsabschnitt (11) bereitgestellt ist, zum Punktschweißen des ersten Abschnitts mit geschlossenem Querschnitt an eines (12a') von den zwei Elementen (12a', f) des zweiten Abschnitts mit geschlossenem Querschnitt,
**dadurch gekennzeichnet, dass** das jeweils andere (f) der zwei Elemente (12a', f) des zweiten Abschnitts mit geschlossenem Querschnitt mit dem Endabschnitt des ersten Abschnitts mit geschlossenem Querschnitt durch MIG-Schweißen (M) verbunden ist, und dass der Öffnungsabschnitt durch Kerbung eines Teils des Endabschnitts des ersten Abschnitts mit geschlossenem Querschnitt gebildet ist.

2. Fahrzeugrahmen-Verbindungsstruktur nach Anspruch 1,
wobei der Endabschnitt des ersten Abschnitts mit geschlossenem Querschnitt derart geschnitten ist, dass der Kreuzungswinkel der Schnittfläche hinsichtlich einer Mittellinie (J), welche durch die Mitte des Fahrzeugs in dessen Breitenrichtung geht und welche dessen Längsrichtung folgt, kleiner ist als in einem Fall, in welchem der Endabschnitt des ersten Abschnitts mit geschlossenem Querschnitt orthogonal zu dessen Längsrichtung geschnitten ist.

3. Fahrzeugrahmen-Verbindungsstruktur nach einem der vorhergehenden Ansprüche,
wobei ein Teil eines Umfangs des Öffnungsabschnitts (11) mit einem vorstehenden Stück (E) bereitgestellt ist, welches in die Längsrichtung des ersten Abschnitts mit geschlossenem Querschnitt vorsteht, und
das vorstehende Stück (E) an eines (12a') der zwei Elemente (12a', f) des zweiten Abschnitts mit geschlossenem Querschnitt punktgeschweißt ist.

## Revendications

1. Structure de joint de châssis de véhicule comprenant :
une première partie de section fermée qui se compose d'un élément (3) ; et
une deuxième partie de section fermée qui se compose de deux éléments (12a', f), à laquelle une partie d'extrémité de la première partie de section fermée est linéairement assemblée de sorte que la première partie de section fermée et la deuxième partie de section fermée sont agencées en ligne droite,
dans laquelle la partie d'extrémité de la première partie de section fermée est prévue avec une partie d'ouverture (11) pour souder par points la première partie de section fermée sur l'un (12a') desdits deux éléments (12a', f) de la deuxième partie de section fermée,
**caractérisée en ce que** l'autre élément respectif (f) desdits deux éléments (12a', f) de la deuxième partie de section fermée est assemblé à la partie d'extrémité de la première section fermée par soudage au magnésium en atmosphère inerte (M) et **en ce que** la partie d'ouverture (11) est formée en crantant une partie d'extrémité de la première partie de section fermée.

2. Structure de joint de châssis de véhicule selon la revendication 1, dans laquelle la partie d'extrémité de la première partie de section fermée est coupée de sorte que l'angle transversal de la surface coupée par rapport à une ligne centrale (J) qui passe par le centre du véhicule dans le sens de sa largeur et suit son sens longitudinal, est inférieur à celui dans le cas dans lequel la partie d'extrémité de la première partie de section fermée est coupée perpendiculairement à sa direction longitudinale.

3. Structure de joint de châssis de véhicule selon l'une quelconque des revendications précédentes, dans laquelle une partie d'une périphérie de la partie d'ouverture (11) est prévue avec une pièce en saillie (E) qui fait saillie dans la direction longitudinale de la première partie de section fermée ; et
la pièce en saillie (E) est soudée par points sur l' un (12a') desdits deux éléments (12a', f) de la deuxième partie de section fermée.
